# EUROPEAN PATENT APPLICATION

(11) **EP 2 273 351 A1**
(43) Date of publication of application: **12.01.2011**
(21) Application number: 09735727.1
(22) Date of filing: 15.04.2009
(51) Int. Cl.: G06F 3/033, G06F 3/048, G06T 1/00, H04M 1/00, H04M 1/02

(54) **MOBILE ELECTRONIC DEVICE**

(30) Priority: 24.04.2008 JP 2008114242; 25.04.2008 JP 2008116349
(71) Applicant: Kyocera Corporation, Kyoto-shi Kyoto 612-8501 (JP)
(72) Inventor: KITAMURA, Yasushi, Kanagawa 224-8502 (JP)
(74) Representative: Schwabe - Sandmair - Marx
(86) International application number: PCT/JP2009/057556
(87) International publication number: WO 2009/131042

(57) **Abstract**

A mobile electronic device, on which both a touch sensor and a fingerprint sensor can be mounted is provided. Furthermore, presence of touch on the touch sensor or the fingerprint sensor efficiently monitored. The mobile electronic device includes the touch sensor that obtains touch information by detecting, in a first touch area, touching with a finger, and the fingerprint sensor that obtains fingerprint information by detecting, in a second touch area adjacent to the first touch area, the surface unevenness of the finger. The mobile electronic device further includes a control unit that generates first movement infonnation relating to the finger by processing of the touch information in time series, generates second movement information relating to the finger by processing of the fingerprint information in time series, and associates the first movement information with the second movement information, thereby generating information relating to movement of the finger from the first touch area to the second touch area, or a control unit that sets a state where finger print detection can be started in the second touch area when detecting touching with the finger in the first touch area.

## Description

### Technical Field

The present invention relates to a mobile electronic device having a touch sensor, such as mobile telephone and the like.

### Background Art

A mobile electronic device having a touch sensor mounted thereon is known. A user can touch the touch sensor to move a pointer on a screen, thereby performing an auxiliary key operation, such as scroll and the like (refer to JP-A-2002-333951).

A mobile electronic device having a fingerprint sensor mounted thereon is also known. A user allows the fingerprint sensor to read out a fingerprint, thereby releasing a lock, for example (refer to JP-A No. 2005-319294).

### Summary of the Invention

### Problem to be solved by the Invention

However, when it is intended to mount the touch sensor and the fingerprint sensor on a mobile telephone, the sensors cannot be generally mounted due to a limitation on a mount space of the mobile telephone.

Further, when it is intended to mount the touch sensor and the fingerprint sensor on a mobile telephone, it is always necessary to monitor whether both a touch panel and the fingerprint sensor are touched.

An object of the present invention is to provide a mobile electronic device on which both a touch sensor and a fingerprint sensor can be mounted.

Another object of the present invention is to provide a mobile electronic device that, in a case where both a touch sensor and a fingerprint sensor are mounted thereon, can efficiently monitor whether both the touch sensor and the fingerprint sensor are touched.

### Means for Solving the Problem

A mobile electronic device according to an aspect of the present invention includes a touch sensor that detects, in a first touch area, touching with a finger to obtain touch information, a fingerprint sensor that detects, in a second touch area adjacent to the first touch area, surface unevenness of the finger to obtain fingerprint information, and a control unit that processes the touch information in time series to generate first movement information of the finger, processes the fingerprint information in time series to generate second movement information of the finger, and associates the first movement information with the second movement information to generate information relating to movement of the finger from the first touch area to the second touch area.

A mobile electronic device according to another aspect of the present invention includes a touch sensor that detects, in a first touch area, touching with a finger to obtain touch information, a fingerprint sensor that detects, in a second touch area provided inside the first touch area, surface unevenness of the finger to obtain fingerprint information, and a control unit that processes the touch information in time series to generate first movement information of the finger, processes the fingerprint information in time series to generate second movement information of the finger, and associates the first movement information with the second movement information to generate information relating to movement of the finger from the first touch area to the second touch area.

The control unit may convert the first movement information in the first touch area into a first rectangular coordinate system, convert the second movement information in the second touch area into a second rectangular coordinate system, and convert a value of the second rectangular coordinate system into the first rectangular coordinate system to generate synthesized movement information of the finger.

In a case where the finger touches only one of the first touch area and the second touch area at a certain time and then touches both the first touch area and the second touch area with the touching being kept, the control unit may generate movement information preferentially from the area that the finger touches at the certain time, as movement information of the finger during time when the finger touches both the areas.

A mobile electronic device according to an aspect of the present invention includes a touch sensor that detects, in a first touch area, touching with a finger to obtain touch information, a fingerprint sensor that detects, in a second touch area adjacent to the first touch area, surface unevenness of the finger to perform fingerprint detection, and a control unit that, when it is detected that the finger touches the first touch area, sets a state capable of starting the fingerprint detection in the second touch area.

The first touch area may have an adjacency area in an area adjacent to the second touch area, and the control unit may set the state capable of starting the fingerprint detection in the second touch area, when it is detected that the finger touches the adjacency area.

The fingerprint sensor may perform the fingerprint detection by scanning the finger on the second touch area.

The control unit may set a direction of the fingerprint detection in the fingerprint sensor based on a position at which the touching with the finger is detected in the first touch area.

A mobile electronic device according to another aspect of the present invention includes a touch sensor that detects, in a first touch area, touching with a finger to obtain touch information, a fingerprint sensor that detects, in a second touch area provided inside the first touch area, surface unevenness of the finger to perform fingerprint detection, and a control unit that, when it is detected that the finger touches the first touch area, sets a state capable of starting the fingerprint detection in the second touch area, and after setting the state capable of starting the fingerprint detection, when the fingerprint detection has completed or the fingerprint detection has not made even though a predetermined time period has elapsed, ends the state capable of starting the fingerprint detection.
The control unit may set the state capable of starting fingerprint detection in the second touch area, when a specific movement of the finger is detected in the first touch area.

### Effects of the Invention

According to the present invention, it is possible to provide a mobile electronic device, on which both a touch sensor and a fingerprint sensor can be mounted.

In addition, according to the present invention, it is possible to provide a mobile electronic device that, in a case where both a touch sensor and a fingerprint sensor are mounted thereon, can efficiently monitor whether both the touch sensor and the fingerprint sensor are touched.

### Brief Description of the Drawings

FIG. 1 shows an example of an exterior configuration of a mobile electronic device according to a first embodiment of the present invention.
FIG. 2 is a block diagram showing an internal configuration of an electric system of the mobile electronic device according to the first embodiment of the present invention.
FIG. 3 shows an example of a mount arrangement of a sensor input unit of the mobile electronic device according to the first embodiment of the present invention and a moving trace of a finger.
FIG. 4 is a block diagram functionally developing a configuration of programs that are executed by a control unit of the mobile electronic device according to the first embodiment of the present invention.
FIG. 5 is a view showing touch areas (first touch area A and second touch area B) of the sensor input unit shown in FIG. 2 while being mapped into rectangular coordinates.
FIG. 6 is a view showing coordinate data in time series, which are respectively output by a touch sensor and a fingerprint sensor, on a time axis.
FIG. 7 is a view showing coordinate data in time series, which are respectively output by a touch sensor and a fingerprint sensor, on a time axis.
FIG. 8 is a flow chart showing an operation of the mobile electronic device according to the first embodiment of the present invention.
FIG. 9 is a block diagram showing an internal configuration of an electric system of a mobile electronic device according to a second embodiment of the present invention.
FIG. 10 is a view showing an example of a mount arrangement of a sensor input unit of the mobile electronic device according to the second embodiment of the present invention and a moving trace of a finger.
FIG. 11 is a block diagram functionally developing a configuration of programs that are executed by a control unit of the mobile electronic device according to the second embodiment of the present invention.
FIG. 12 is a flow chart showing an operation of the mobile electronic device according to the second embodiment of the present invention.
FIG. 13 is a flow chart showing an operation of a mobile electronic device according to another embodiment of the present invention.
FIG. 14 is a view showing another example of a mount arrangement of a sensor input unit of a mobile electronic device according to another embodiment of the present invention.
FIG. 15 is a view showing another example of a moving trace of a finger in a sensor input unit of a mobile electronic device according to another embodiment of the present invention.

### Embodiments of the Invention

### (First Embodiment)

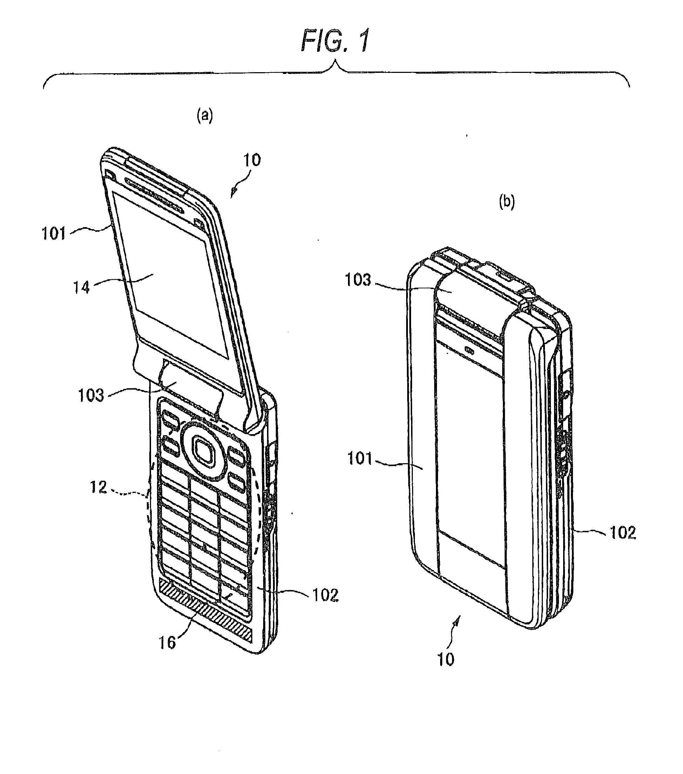

FIG 1 shows an example of an exterior configuration of a mobile electronic device according to a first embodiment of the present invention. Herein, a mobile telephone 10 of a folder type is exemplified as the mobile electronic device.

As shown in FIG. 1, the mobile telephone 10 has an upper case 101, a lower case 102 and a hinge part 103.

FIG. 1(a) shows a state where the mobile telephone 10 is opened (open state) and FIG. 1(b) shows a state where the mobile telephone 10 is folded (close state).

As shown in FIG. 1(a), the upper case 101 has a display unit 14 that is arranged on one side, which is not exposed to the outside at the close state of the mobile telephone 10 shown in FIG. 1(b).

As shown in FIG. 1(a), the lower case 102 has an operation unit 12 that is arranged on one side, which is not exposed to the outside at the close state of the mobile telephone 10 shown in FIG. 1(b).
The lower case 102 is also arranged with a sensor input unit 116 including a touch sensor and a fingerprint sensor. A mount arrangement of the touch sensor and the fingerprint sensor in the sensor input unit 116 will be described below.

The hinge part 103 is a hinge mechanism that allows the upper case 101 and the lower case 102 to open and close, and has a rotational axis allows transit between the open state of the mobile telephone 10 shown in FIG 1(a) and the close state shown in FIG. 1(b).

The open state and the close state of the mobile telephone 10 are monitored by a control unit 118 embedded therein (here, not shown). The control unit 118 can detect the close state of the mobile telephone 10.
Specifically, the control unit monitors whether a detection switch (not shown) of the lower case 102 is pushed by a protrusion (not shown) arranged at the upper case 101, thereby detecting the close state.
In other words, the control unit 118 determines that the mobile telephone is in the close state when the detection switch is pushed and that the mobile telephone is in the open state when the detection switch is not pushed.

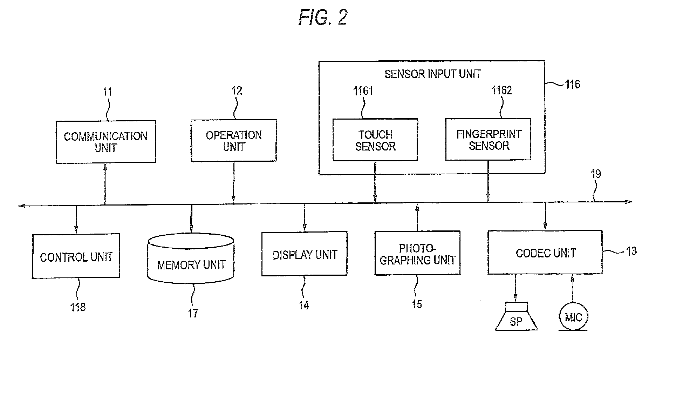

FIG. 2 is a block diagram showing an internal configuration of an electric system of the mobile electronic device (mobile telephone 10) according to the first embodiment of the present invention.

As shown in FIG. 2, the mobile telephone 10 has the control unit 118 as a main controller, a communication unit 11, the operation unit 12, a CODEC (COder DECorder) unit 13, the display unit 14, a photographing unit 15, the sensor input unit 16, a memory unit 17 and the control unit 118, which are commonly connected to a system bus 19 including a plurality of lines for address, data and control, respectively.

The communication unit 11 detects a wireless communication system and performs wireless communication between base stations (not shown) connected to a communication network, thereby transmitting and receiving a variety of data.
The variety of data includes voice data in voice communication, mail data in mail transmission/reception, web page data in web visiting, and the like.

The operation unit 12 includes keys having various functions allotted thereto, such as power key, communication key, number keys, direction keys, enter key, send key, function keys and the like.
When an operator operates the keys, the operation key 12 generates a signal corresponding to the operation and outputs the signal to the control unit 118, as an instruction of the operator.

The CODEC unit 13 performs an input/output process of a voice signal output from a speaker and a voice signal input from a microphone.
In other words, the CODEC unit 13 amplifies the voice input from the microphone and performs an analog-digital conversion for the amplified audio and signal processing such as encoding to convert the voice into digital audio data and to output the digital voice data to the control unit 118.
In addition, the CODEC unit 13 performs signal processing for the voice data supplied from the control unit 118, such as decoding, digital-analog conversion, amplification and the like to convert the voice data into an analog voice signal and to output the analog voice signal to the speaker.

The display unit 14 has a plurality of pixels (combinations of light emitting devices of plural colors), which are arranged lengthwise and widthwise. For example, the display unit is configured by an LCD (Liquid Crystal Device) or organic EL (Electro-Luminescence) device.
The display unit 14 displays an image that corresponds to display object data of a document and the like, which is generated and written into a predetermined area (VRAM area) of the memory unit 17 by the control unit 118.
For example, the display unit 114 displays a telephone number of a calling destination at the time of wireless transmission by the communication unit 11, a telephone number of a calling source at the time of call reception, contents of a received or transmitted mail, a web page, a date, time, a remaining amount of a battery, whether transmission is successful, a document, a standby screen and the like.

The photographing unit 15 is a camera embedded in the mobile telephone 10, which is configured by a photoelectric conversion device such as CCD (Charge Coupled Device) or CMOS (Complementary Metal Oxide Semiconductor) image sensors, a control circuit thereof and the like.

The sensor input unit 116 is configured by a touch sensor 1161 and a fingerprint sensor 1162, as described above.

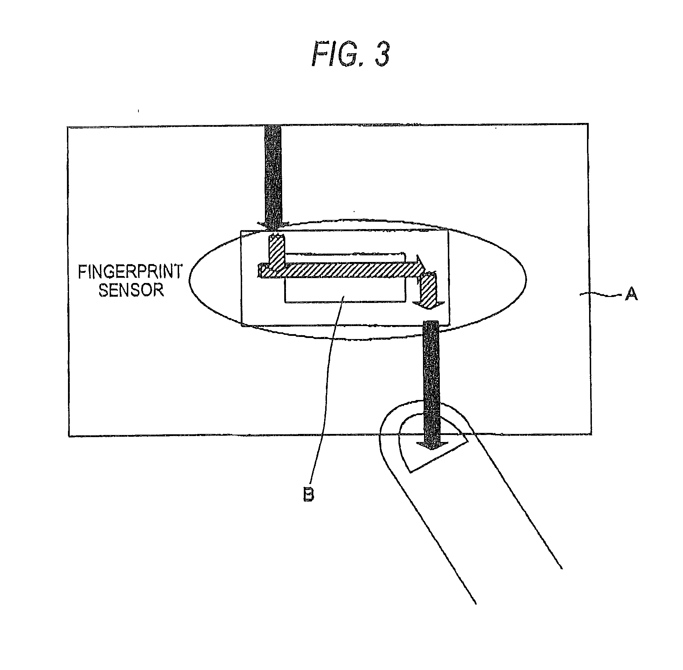

FIG. 3 shows an example of a mount position relation of the touch sensor 1161 and the fingerprint sensor 1162 and a moving trace of a finger. Herein, it is assumed that the fingerprint sensor 1162 is mounted inside the touch sensor 1161.
In FIG. 3, regarding the movement of a touching finger, a range where the touch sensor 1161 responds is referred to as a first touch area A and a range where the fingerprint sensor 1162 responds is referred to as a second touch area B. In the example shown in FIG. 3, the second touch area is allotted inside the first touch area.

When the sensors are mounted as described above, if movement of the finger is detected by the touch sensor 1161 only or fingerprint sensor 1162 only, data relating to the movement of a user's finger may be failed to be obtained.
Specifically, in FIG. 3, even when the finger is moved in the second touch area B, the movement cannot be detected. Accordingly, even though the finger is continuously moved downward, rightward and downward, the software (control unit 118) determines that the finger is once moved and then detached and put on again.
In FIG. 3, solid arrows indicate the moving traces of the finger and hatched arrows indicate the moving traces of the finger on the fingerprint sensor 1162, which are detected by the software.

Therefore, in the mobile electronic device (mobile telephone 10) of the first embodiment of the present invention, both the touch sensor 1161 (first touch area A) and the fingerprint sensor 1162 (second touch area 1162) detect the movement data of the finger, respectively, and the touch position of the finger is determined depending on the respective movement data.
Basically, a movement range of the finger is narrower at the fingerprint sensor 1162. Since the position data, which is output when the finger is moved in the first touch area A and the second touch area B, becomes discontinuous, the data output from the fingerprint sensor 162 is corrected and is thus made to be continuous, so that it is possible to realize integration of the touch sensor 1161 and the fingerprint sensor 1162.

The touch sensor 1161 has a function of detecting, in the first touch area, touching with the finger to obtain touch information, for example. The fingerprint sensor 1162 has a function of detecting, in the second touch area B adjacent to the first touch area A, surface unevenness of the finger to detect a fingerprint.
The touch sensor 1161 is, for example, an electrostatic capacity type suitable for miniaturization. In this case, the touch sensor has such a structure that a plurality of electrodes is arranged into a lattice shape while sandwiching insulators therebetween, in each of X and Y directions on a plane.
All of the electrodes serve as capacitors having predetermined capacitance. When a finger approaches the electrodes, the electrodes are influenced by the finger which is conductive, so that a part of an electric field is distorted in a direction of the finger by electromagnetic induction. As a result, the capacitance is changed (for example, several pF).
Accordingly, the control unit 118 can detect at which position of the lattice shape the change in capacitance has occurred by referring to potential between the electrodes passing to each of the X and Y directions.

Similarly to the touch sensor 1161, the fingerprint sensor 1162 is also an electrostatic capacity type, for example. In this case, the fingerprint sensor has such a structure that a plurality of electrodes is provided under a hard protective film and charges depending on distances between a surface of the finger and the electrodes are collected in the electrodes.

The fingerprint sensor 1162 outputs a fingerprint image by sensing charges of the respective electrodes and performing an AD (Analog-Digital) conversion. For example, when a pitch of the electrodes is several tens µm, it is possible to detect the surface unevenness of the finger of 200 µm or more with high precision. In the meantime, the pitch of the electrodes of the fingerprint sensor 1162 may be smaller than a pitch of the electrodes of the touch sensor 1161. Thereby, the number of electrodes per unit area, which serve as sensor devices in the fingerprint sensor 1162, is greater than that of the touch sensor 1161, so that the precision of the fingerprint information obtained in the fingerprint sensor 1162 can be improved.
Recently, for miniaturization and power saving, a sweep type is known which detects the electrodes by tracing them with a finger in any direction of X and Y directions, instead of a fixed type.
Both of the fixed type and the sweep type perform a pattern matching process or extracts characteristic points to compare them with registered data by fingerprint authentication software, which is executed by the control unit 118.

The memory unit 17 stores various data that is used for a variety of processes of the mobile telephone 10.
The memory unit 17 stores a computer program that is executed by the control unit 118, an address book that manages personal information such as telephone numbers of communication parties, e-mail addresses and the like, an audio file for reproducing a ringtone or alarm sound, an image file for standby screen, various setting data and temporary data that is used in program processing.
The memory unit 117 is configured by a non-volatile memory device (non-volatile semiconductor memory, hard disk drive, optical disk drive and the like), randomly accessible memory device (for example, SRAM and DRAM) and the like, for example.

The control unit 118 collectively controls the general operations of the mobile telephone 10.
That is, the control unit 118 controls the operations of the above control blocks so that various processes of the mobile telephone 10 are executed in an appropriate sequence in response to the operations of the operation unit 12.
The various processes that are controlled by the control unit 118 include a voice communication that is performed through a circuit switched network, preparation and transmission/reception of an e-mail, visiting of an internet web (World Wide Web) site and the like.
In addition, the operations of the respective control blocks, which are controlled by the control unit 118, include transmission/reception of a signal in the communication unit 11, voice input/output in the CODEC unit 13, an image display on the display unit 14, a photographing process in the photographing unit 15 and the like.

The control unit 118 has a computer (micro processor) that executes a process, based on the programs stored in the memory unit 17, for example operating system and application program.
The control unit 118 executes the above processes in accordance with an instruction-received order in the programs. In other words, the control unit 118 sequentially reads out instruction codes from the programs stored in the memory unit 17, such as operating system and application program, and thus executes the processes.

Regarding each of cases where the second touch area B is adjacent to the first touch area A and where the second touch area B is arranged inside the first touch area A, the control unit 118 further has a function of processing the touch information in time series, which is obtained by the touch sensor 1161, to generate first movement information of the finger.
In addition, the control unit 118 has a function of processing the fingerprint information in time series, which is obtained by the fingerprint sensor 1162, to generate second movement information of the finger and associating the first movement information with the second movement information to generate information relating to movement of the finger from the first touch area to the second touch area.
Herein, the "first movement information" is a value in the rectangular coordinate, which is generated based on the touch information output by the touch sensor 1161.
The "second movement information" is coordinate data having time data attached thereto, which is generated based on the fingerprint information output by the fingerprint sensor 1162.

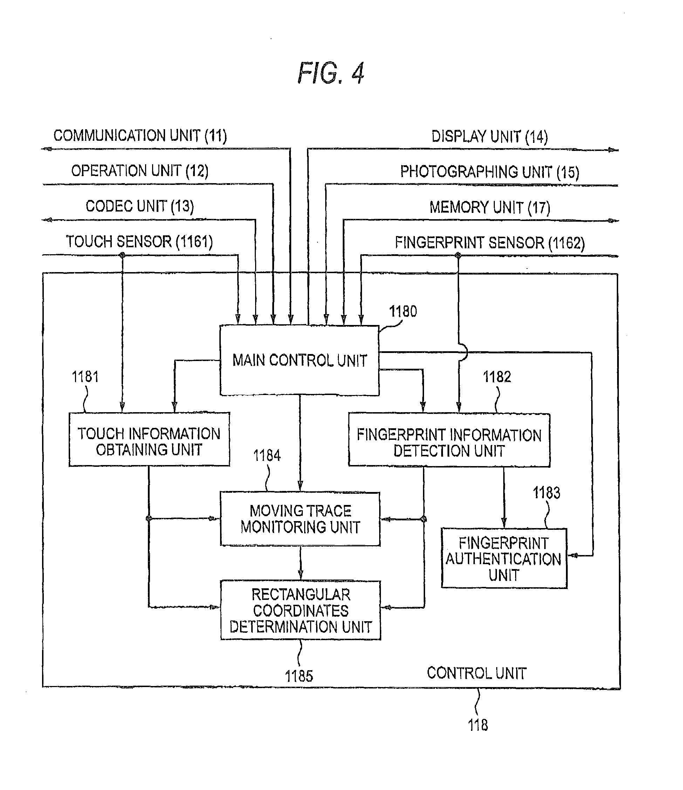

Accordingly, the program that is executed by the control unit 118 is configured by a main control unit 1180, a touch information obtaining unit 1181, a fingerprint information detection unit 1182, a fingerprint authentication unit 1183, a moving trace monitoring unit 1184 and a rectangular coordinates determination unit 1185, as shown in FIG. 4 in which the program is functionally developed.

The touch information obtaining unit 1181 obtains information about whether touching is performed and a touch position, which are detected by the touch sensor 1161, and outputs the information to the moving trace monitoring unit 1184 and the rectangular coordinates determination unit 1183.

The fingerprint information detection unit 1182 detects, in the second touch area B adjacent to the first touch area A, the surface unevenness of the finger to detect fingerprint information and outputs the fingerprint information to the fingerprint authentication unit 1183, the moving trace monitoring unit 1184 and the rectangular coordinates determination unit 1185.

The fingerprint authentication unit 1183 extracts, for example, characteristic points (end points) from the detected fingerprint information, stores information of the extracted characteristic points in a predetermined area of the memory unit 17 and compares the information of the extracted characteristic points with registered data of characteristic points, thereby performing fingerprint authentication.

The moving trace monitoring unit 1184 processes the touch information in time series, which is output by the touch information obtaining unit 1181, to generate first movement information of the finger and the fingerprint information, which is output by the fingerprint information detection unit 1182, to generate second movement information of the finger and outputs the generated first and second movement information to the rectangular coordinates determination unit 1185, respectively.
As described above, both the first movement information and the second movement information are data in which the time data is attached to the coordinate data.

The rectangular coordinates determination unit 1185 associates the first movement information and the second movement information with each other, which are output by the moving trace monitoring unit 1184, to generate information relating to movement of the finger from the first touch area A to the second touch area B.
When converting the first movement information and the second movement information into rectangular coordinates, for example, the rectangular coordinates determination unit 1185 replaces the rectangular coordinates of the second movement information with the rectangular coordinates of the first movement information to generate continuous linear coordinate data, in accordance with aspect ratios of the touch sensor 1161 and the fingerprint sensor 1162. The detailed description will be provided below.

In the meantime, in order to realize the functions of the control unit 118, the main control unit 1180 performs the sequence control of the respective function blocks 1181 to 1185.
The functions of the control unit 118 include the function of processing the touch information in time series to generate the first movement information of the finger, for each of cases where the second touch area B is adjacent to the first touch area A and where the second touch area B is arranged inside the first touch area A.
In addition, the functions of the control unit 118 include the functions of processing the fingerprint information in time series to generate the second movement information of the finger and associating the first movement information with the second movement information to generate the information relating to movement of the finger from the first touch area to the second touch area.

The main control unit 1180 serves as an interface with the peripheral control blocks such as the communication unit 11, the operation unit 12, the CODEC unit 13, the display unit 14, the photographing unit 15, the sensor input unit 16 (touch sensor 1161 and fingerprint sensor 1162), the memory unit 17 and the like.

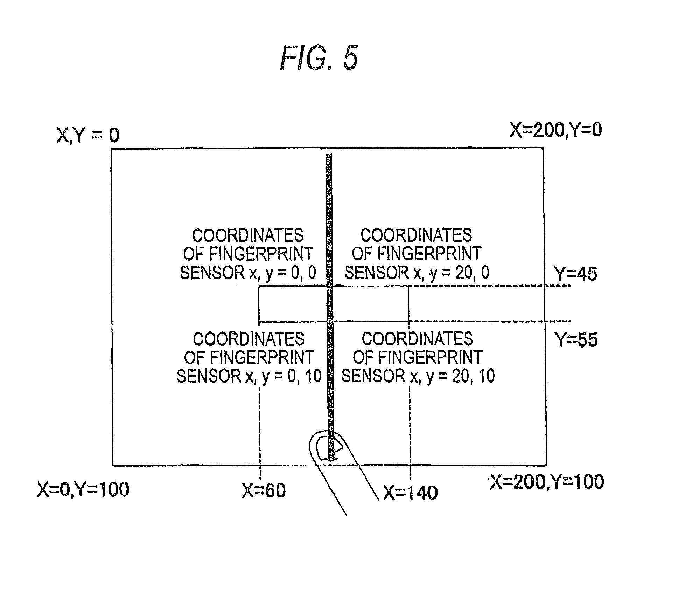

Herein, the principle of the coordinate conversion by the rectangular coordinates determination unit 1185 will be described in detail with an example of a mount arrangement of the fingerprint sensor 1162 in the touch sensor 1161 with reference to FIGS. 5 to 7.

FIG. 5 is a view showing touch areas (first touch area A and second touch area B) of the sensor input unit 116 having the touch sensor 1161 and the fingerprint sensor 1162 mounted thereon while being mapped into rectangular coordinates.
As shown in FIG. 5, a position relation on the rectangular coordinates of the touch sensor 1161 having coordinates X, Y of the first touch area A and the fingerprint sensor 1162 having coordinates x, y of the second touch area B is as follows: (X, Y)=(60, 45)=(x, y)=(0, 0), (X, Y)=(60, 55)=(x, y)=(0, 10), (X, Y)=(140, 45)=(x, y)=(20, 0), (X, Y)=(140, 55)=(x, y)=(20, 10).

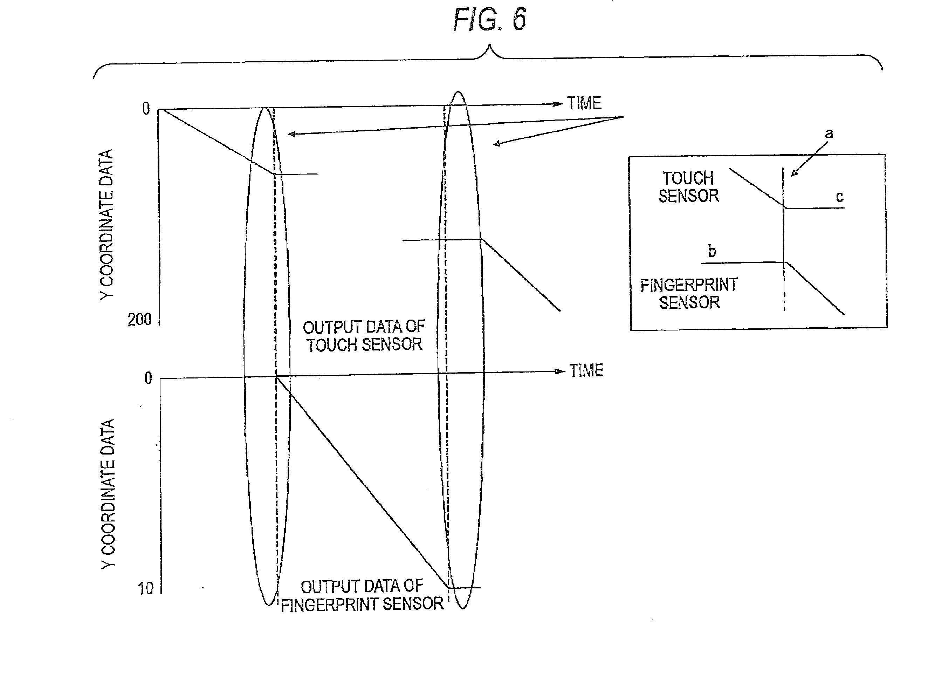

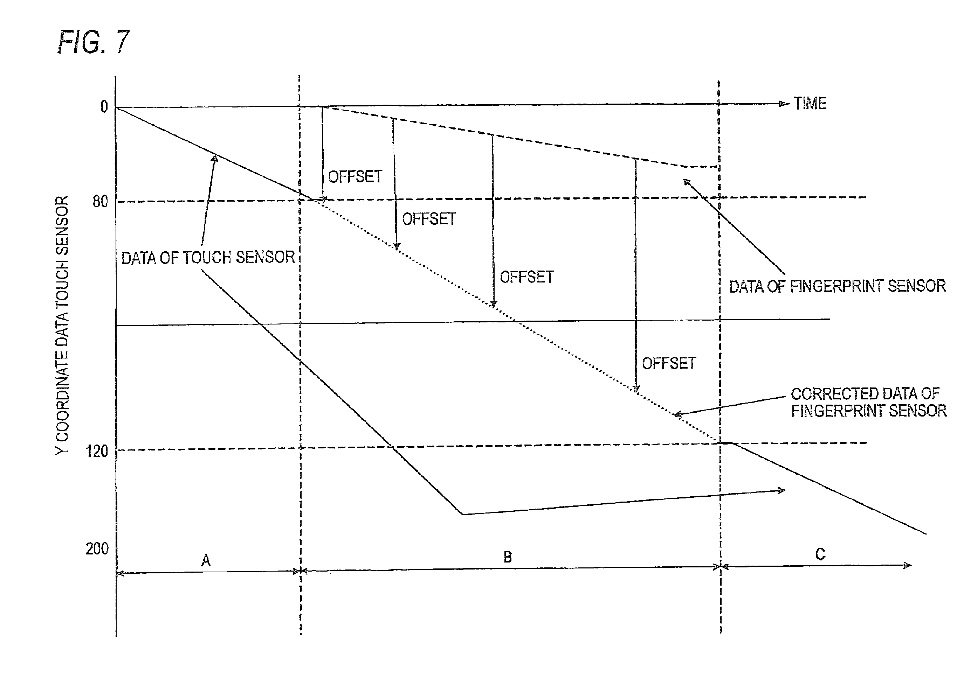

FIGS. 6 and 7 are views showing coordinate data (here, Y(y) coordinates) in time series, which are respectively output by the touch sensor 1161 and the fingerprint sensor 1162, on a time axis.
As shown in FIG. 6, the coordinate data of the touch sensor 1161 and the coordinate data of the fingerprint sensor 1162 have totally different maximum and minimum values. Generally, there is no interrelationship between two of the coordinate data.

However, since correspondence of pointing positions and coordinate data is known depending on the specifications, it is possible to generate the continuous linear coordinate data regarding the movement of the finger by replacing the coordinate data of the fingerprint sensor 1162 having less movement than the touch sensor 1161 with the coordinate data of the touch sensor 1161, as shown in FIG. 7.
Herein, in accordance with an offset amount determined based on the size ratio of the coordinate data of the touch sensor 1161 and the fingerprint sensor 1162, the coordinate data of the fingerprint sensor 1162 is offset-corrected to complement the coordinate data, which is obtained when the fingerprint sensor 1162 is touched.
Since the offset amount is determined depending on the number of sensors (sizes) of the touch sensor 1161 and the fingerprint sensor 1162, the offset amount is different depending on sensor modules to be used.

Meanwhile, a graph shown in a rectangular frame of FIG. 6 shows enlarged coordinate data at a timing when the touch sensor 1161 and the fingerprint sensor 1162 respond at the same time.
A line indicated with a reference mark "a" indicates a boundary of the touch sensor 1161 and the fingerprint sensor 1162.
As clearly seen from the above, since the finger touches the fingerprint sensor 1162 little bit at a point b, the coordinate data is output while recognizing that the finger also touches the touch sensor 1161. However, since the finger is not moving on the fingerprint sensor 1162, the coordinate data is not changed.
In addition, since the finger touching the fingerprint sensor 1162 touches a little bit at a point c, the touch sensor 1161 also responds.
However, the coordinate data of a position at which the touch sensor 1161 touches is not changed.

In addition, time zones, which are indicated with reference marks A and C in FIG. 7, are zones where the coordinates are determined only with the coordinate data of the touch sensor 1161, and a time zone, which is indicated with a reference mark B, is a zone in which the coordinates are determined only with the coordinate data of the fingerprint sensor 1162. At this time, the rectangular coordinates determination unit 1185 performs the offset correction, as described above.
In FIG. 7, the straight line indicates the coordinate output data of the touch sensor 1161, the dotted line indicates the output data of the fingerprint sensor 1162 and the dashed line indicates the coordinate output data obtained by offset-correcting the coordinate output data of the fingerprint sensor 1162.

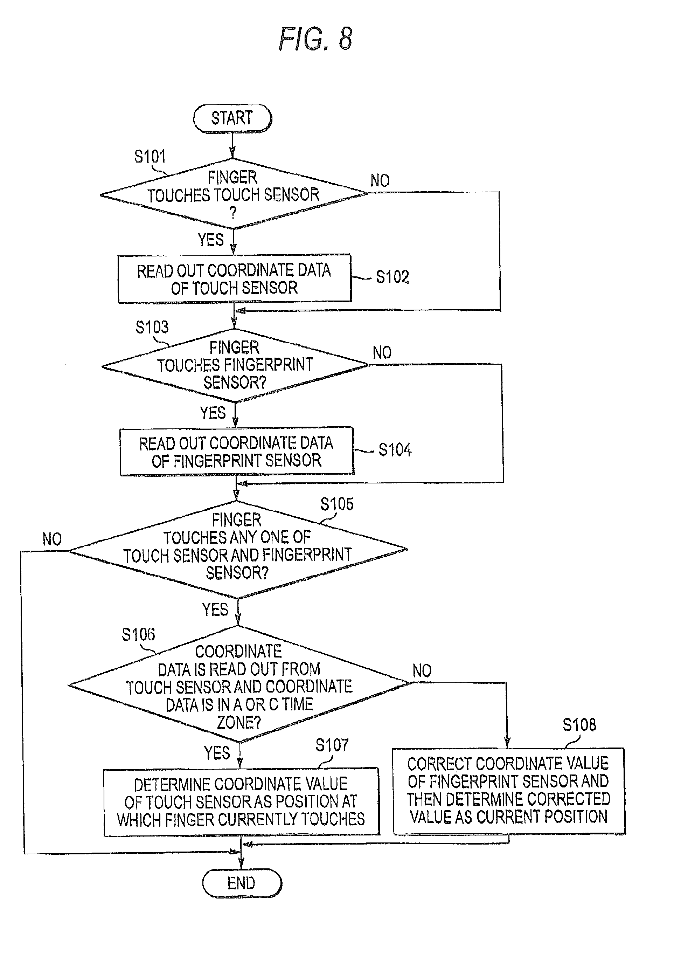

FIG. 8 is a flow chart showing an operation of the mobile electronic device (mobile telephone 10) according to the first embodiment of the present invention.
Hereinafter, the operations of the mobile electronic device (mobile telephone 10) according to the first embodiment of the present invention shown in FIGS. 1 to 7 will be described with reference to the flow chart of FIG. 8.

The control unit 118 (main control unit 1180) determines whether a finger touches the first touch area A of the touch sensor 1161 by the touch information obtaining unit 1181 (step S101).
Here, when it is determined that a finger touches the first touch area A (YES in step S101), the main control unit 1180 outputs touch information, which is obtained through the touch information obtaining unit 1181, to the moving trace monitoring unit 1184, and the moving trace monitoring unit 1184 processes the touch information in time series, which is obtained from the touch information obtaining unit 1181, to generate and output first movement information of the finger to the rectangular coordinates determination unit 1185 (step S102).
In the meantime, when it is determined that a finger does not touch the first touch area A (NO in step S101), the main control unit 1180 performs a process of step S103.

In step S103, the main control unit 1180 determines whether the finger touches the second touch area B of the fingerprint sensor 1182 by the fingerprint information detection unit 1182.
Here, when it is determined that the finger touches the second touch area B (YES in step S103), the main control unit 1180 outputs fingerprint information, which is detected through the fingerprint information detection unit 1182, to the moving trace monitoring unit 1184.
The moving trace monitoring unit 1184 processes the fingerprint information in time series, which is obtained from the fingerprint information detection unit 1182, to generate and output second movement information of the finger to the rectangular coordinates determination unit 1185 (step S104).
In the meantime, when it is determined that the finger does not touch the second touch area B (NO in step S103), the main control unit 1180 performs a process of step S105.

In step S105, the main control unit 1180 determines whether the finger touches any one of the first touch area A and the second touch area B by the touch information obtaining unit 1181, the fingerprint information detection unit 1182 or the fingerprint sensor 1162.
Here, when it is determined that the finger touches any one of the first touch area A and the second touch area B (YES in step S 105), the main control unit 1180 further obtains coordinate data by the touch information obtaining unit 1181 (touch sensor 1161) and determines whether a timing, at which the coordinate data is obtained, is within the time zones A, C shown in FIG. 7, from the data output by the moving trace monitoring unit 184 (step S106).

Here, when the coordinate data is obtained by the touch information obtaining unit 1181 (touch sensor 1161) and it is determined that the timing at which the coordinate data is obtained is within the time zones A, C shown in FIG. 7 (YES in step S106), the rectangular coordinates determination unit 1185 determines the coordinate data, which is output by the touch sensor 1161, as a position at which the finger currently touches, and ends the above processes (step S107).
When the coordinate data is obtained by the touch information obtaining unit 1181 (touch sensor 1161) and it is determined that the timing at which the coordinate data is obtained is within the time zone B shown in FIG. 7 (NO in step S106), the rectangular coordinates determination unit 1185 performs a following process.
In other words, the rectangular coordinates determination unit 1185 performs an offset correction for the position data of the fingerprint sensor 1162, which is obtained from the fingerprint information detection unit 1182, determines the resultant data as a position at which the finger currently touches, and ends the above processes (step S108).

Although not shown in the flow chart of FIG. 8, the fingerprint information output by the fingerprint information detection unit 1182 is also output to the fingerprint authentication unit 1183.
At this time, the fingerprint authentication unit 1183 extracts characteristic points (end point, branch point), for example, from the detected fingerprint information, holds information of the extracted characteristic points in a predetermined area of the memory unit 17 and compares the information of the extracted characteristic points with the registered data of characteristic points, thereby authenticating the fingerprint.
Further, in the determination process of step S105, when it is determined that the finger does not touch any of the first touch area A and the second touch area B (NO in step S105), the main control unit ends the above processes.

As described above, according to the mobile electronic device of the first embodiment of the present invention, the fingerprint sensor 1162 has the narrower movement range than the touch sensor 1161 and the coordinate data, which is obtained when the finger moves between the touch sensor 1161 and the fingerprint sensor 1162, is discontinuous.
Accordingly, the control unit 118 corrects the coordinate data of the fingerprint sensor 1162 with the coordinate data of the touch sensor 1161 to output the linear coordinate data.
Thus, it is possible to mount a touch sensor having a fingerprint sensor integrated thereto as the sensor input unit 116, so that the particularly advantageous effects are obtained when the present invention is applied to a mobile telephone having a limitation on a mount space.
In addition, by detecting the outputs of the touch sensor 1161 and the fingerprint sensor 1162 at the same time, it is possible to make a touch sensor having a fingerprint sensor integrated thereto without deteriorating user's conveniences. Further, the sensor input unit 16 is modularized, so that a mount space is further reduced to increase a freedom of designs of a mobile electronic device. In addition, such modularization can reduce the number of assembling processes.

In the mobile electronic device of the first embodiment of the present invention, the fingerprint sensor 1162 is mounted inside the touch sensor 1161. However, any mounting configuration may be made as long as both of the sensors are adjacent to each other, such as a mount arrangement of the fingerprint sensor 1162 on a top of the touch sensor 1161.
In addition, the mobile telephone 10 is exemplified as the mobile electronic device in the first embodiment of the present invention. However, the present invention is not limited to the mobile telephone 10. For example, the present invention can be applied to a PDA (Personal Digital Assistant), a gaming device and the like.

In the meantime, all of the functions of the respective function blocks of the mobile electronic device according to the first embodiment of the present invention may be embodied with software or at least a part thereof may be embodied with hardware.
For example, regarding each of cases where the second touch area is adjacent to the first touch area and where the second touch area is arranged inside the first touch area, the data process of the control unit 118 of processing the touch information in time series to generate the first movement information of the finger and processing the fingerprint information in time series to generate the second movement information of the finger and associating the first movement information with the second movement information to generate the information relating to movement of the finger from the first touch area to the second touch area may be embodied on a computer by one or more programs or at least a part thereof may be embodied with hardware.

### (Second Embodiment)

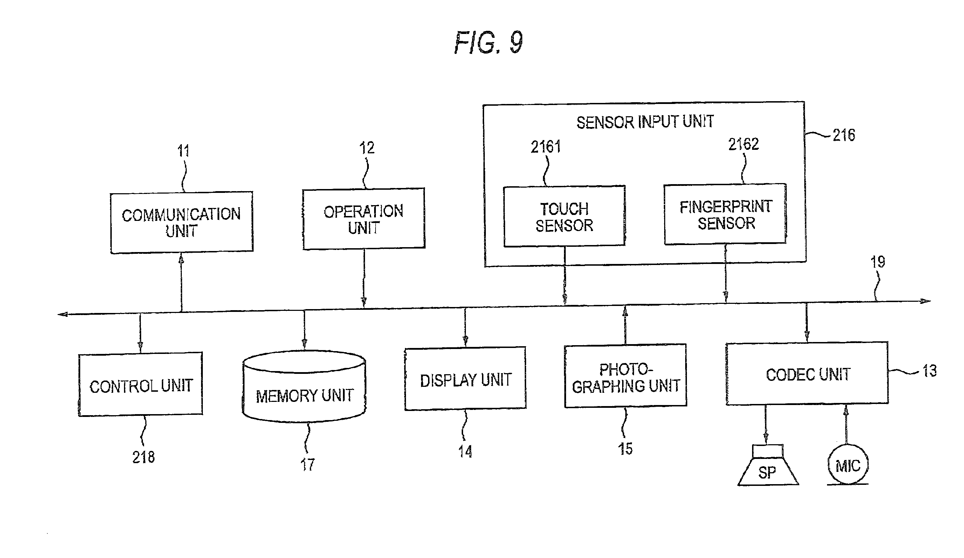

FIG. 9 is a block diagram showing an internal configuration of an electric system of a mobile electronic device (mobile telephone 10) according to a second embodiment of the present invention.
As shown in FIG. 9, the mobile telephone 10 is configured by the communication unit 11, the operation unit 12, the CODEC (COder DECorder) unit 13, the display unit 14, the photographing unit 15, a sensor input unit 216, the memory unit 17 and a control unit 218, which are commonly connected to the system bus 19 including a plurality of lines for address, data and control, respectively.
Among the constitutional elements, the substantially same structures as the first embodiment are indicated with the same reference numerals and the overlapped descriptions will be omitted. Here, only the sensor input unit 216 and the control unit 218 having different configurations will be described.

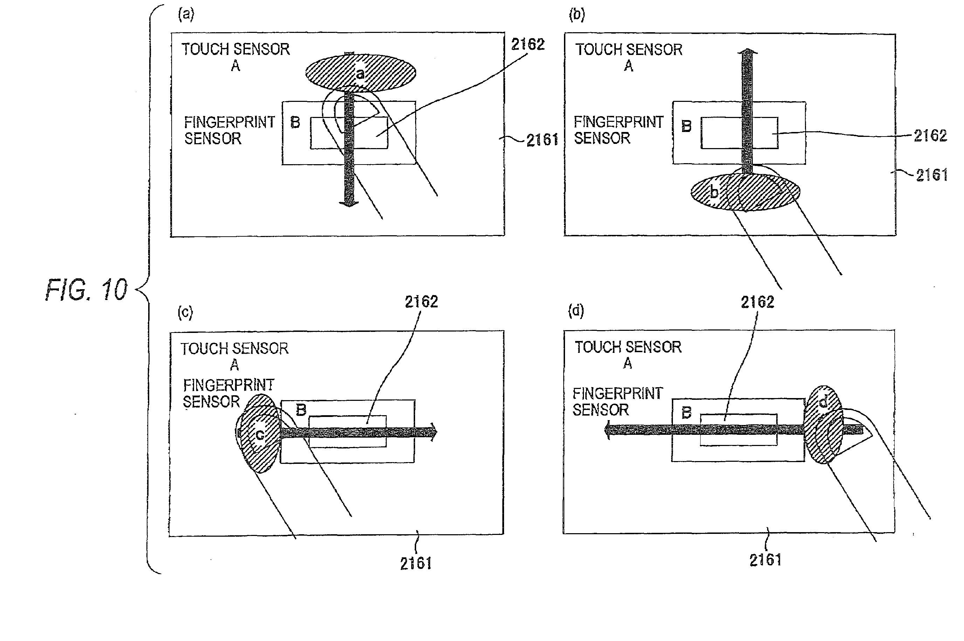

The sensor input unit 216 is configured by a touch sensor 2161 and a fingerprint sensor 2162. FIGS. 10(a), 10(b), 10(c) and 10(d) show mount arrangements of the touch sensor 2161 and the fingerprint sensor 2162 and moving traces of a finger. Herein, it is assumed that the fingerprint sensor 2162 is mounted inside the touch sensor 2161.
The solid arrows in FIGS. 10(a), 10(b), 10(c) and 10(d) indicate moving traces of a finger. Further, regarding movement of the touching finger, a range where the touch sensor 2161 responds is referred to as a first touch area A and a range where the fingerprint sensor 162 responds is referred to as a second touch area B.
In the example shown in FIG. 10, the second touch area B is provided inside the first touch area A.

FIG. 10(a) shows an example where, when a finger touches an area a in the first touch area A, a detection direction for (the fingerprint sensor 2162 of) the second touch area B is set in a downward direction.
FIG. 10(b) shows an example where, when a finger touches an area b in the first touch area A, a detection direction for (the fingerprint sensor 2162 of) the second touch area B is set in an upward direction.
FIG. 10(c) shows an example where, when a finger touches an area c in the first touch area A, a detection direction for (the fingerprint sensor 2162 of) the second touch area B is set in a rightward direction.
FIG. 10(d) shows an example where, when a finger touches an area d in the first touch area A, a detection direction for (the fingerprint sensor 2162 of) the second touch area B is set in a leftward direction.

The touch sensor 2161 has a function of detecting, in the first touch area A, touching with a finger to obtain touch information, for example. The fingerprint sensor 2162 has a function of detecting, in the second touch area B adjacent to the first touch area A, surface unevenness of the finger to detect a fingerprint.

The touch sensor 2161 may be, for example, an electrostatic capacity type suitable for miniaturization, as the touch sensor 1161 of the first embodiment.

The fingerprint sensor 2162 may be also, for example, an electrostatic capacity type, as the fingerprint sensor 1162 of the first embodiment.

The control unit 218 collectively controls the general operations of the mobile telephone 10 of the second embodiment.

The control unit 218 has a function of, when the second touch area B is adjacent to the first touch area A and it is detected that a finger touches the first touch area A (for example, it is detected that a finger touches the area a of FIG. 10(a)), setting a state capable of starting fingerprint detection in the second touch area B. Here, the adjacency refers to not only a case where the areas are contacted to each other but also includes, for example, a case where another element (for example, key button and the like) is not interposed between the areas.
The control unit 218 has a function of, when the second touch area B is in the first touch area A (for example, FIGS. 10(a), 10(b), 10(c) and 10(d)) and it is detected that a finger touches any area of the first touch area A (for example, area a in FIG. 10(a)), setting a state capable of starting fingerprint detection in the second touch area B.
After setting the state capable of starting fingerprint detection, when fingerprint detection has completed or fingerprint detection has not made even though a predetermined time period has elapsed, the control unit 218 ends the state capable of starting fingerprint detection.

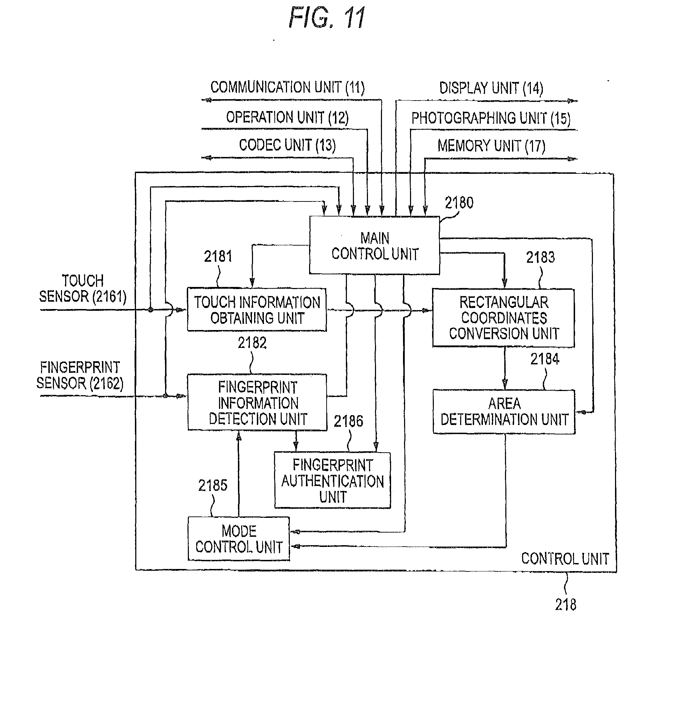

The program that is executed by the control unit 218 is configured by a main control unit 2180, a touch information obtaining unit 2181, a fingerprint information detection unit 2182, a rectangular coordinates information conversion unit 2183, an area determination unit 2184, a mode control unit 2185 and a fingerprint authentication unit 2186, as shown in FIG 11 in which the program is functionally developed.

The touch information obtaining unit 2181 obtains information about whether touching is performed and a touch position in the first touch area A, which are detected by the touch sensor 2161, and outputs the information to the rectangular coordinates conversion unit 2183.

The rectangular coordinates conversion unit 2183 converts the touch position information, which is detected by the touch sensor 2162, into rectangular coordinates by calculation and outputs the rectangular coordinates to the area determination unit 2184.

The area determination unit 2184 compares the rectangular coordinates, which are generated by the rectangular coordinates conversion unit 2183, with preset boundary values (rectangular coordinates of the first touch area A and the second touch area B) to determine a timing when a finger passes the second touch area B from the first touch area A, thereby controlling operation modes ("standby mode," "detection mode" and "pause mode") of the fingerprint sensor 2162 by the mode control unit 2185.

Here, the "standby mode" means an operation mode where power (not shown) is supplied (or re-supplied) to the fingerprint sensor 2162, a scan direction is set, as required, and a fingerprint can be thus detected by the fingerprint sensor 162.
The "detection mode" means an operation mode where fingerprint information is taken by the fingerprint sensor 2162 and a fingerprint authentication is thus performed.
The "pause mode" means a state where the power supply is stopped and a fingerprint cannot be thus detected by the fingerprint sensor 2162 or a state of a low power consumption mode having power consumption lower than the standby mode,

The fingerprint authentication unit 2186 has a function of extracting, for example, characteristic points (end point, branch point) from the detected fingerprint information, storing information of the extracted characteristic points in a predetermined area of the memory unit 17 and comparing the information of the extracted characteristic points with the registered data of characteristic points, thereby performing fingerprint authentication.

In order to realize the functions of the control unit 218, the main control unit 2180 performs the sequence control of the respective function blocks 2181 to 2186.
The functions of the control unit 218 include a function of, when the second touch area B is adjacent to the first touch area A and it is detected that a finger touches the first touch area A, setting a state capable of starting fingerprint detection in the second touch area B.
Alternatively, the functions of the control unit include a function of, when the second touch area B is inside the first touch area A and it is detected that a finger touches in any area of the first touch area A, setting a state capable of starting fingerprint detection in the second touch area B.
In addition, the functions of the control unit 218 include a function of ending the state capable of starting fingerprint detection, when fingerprint detection has completed or fingerprint detection has not made even though a predetermined time period has elapsed, after setting the state capable of starting fingerprint detection.

The main control unit 2180 also serves as an interface with the peripheral control blocks such as the communication unit 11, the operation unit 12, the CODEC unit 13, the display unit 14, the photographing unit 15, the sensor input unit 216 (touch sensor 2161 and fingerprint sensor 2162), the memory unit 17 and the like.

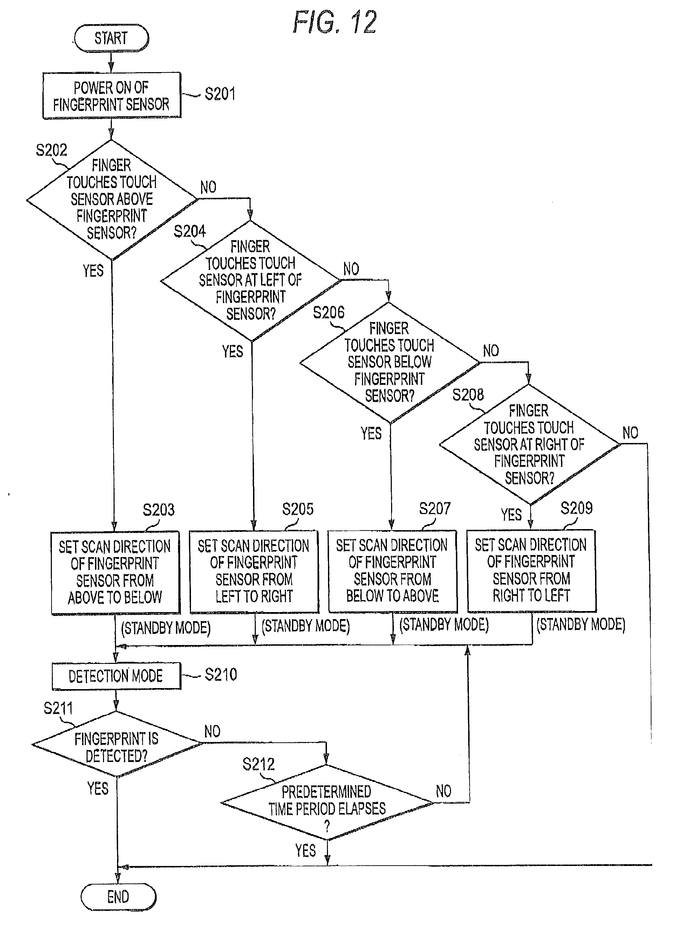

FIG. 12 is a flow chart showing an operation of the mobile electronic device (mobile telephone 10) according to the second embodiment of the present invention.
Hereinafter, the operations of the mobile electronic device (mobile telephone 10) according to the second embodiment of the present invention shown in FIGS. 9 to 11 will be described with reference to the flow chart of FIG. 12.

First, the control unit 218 (main control unit 2180) supplies power to the fingerprint sensor 2162 or resumes power supply (step S201: power ON). The area determination unit 2184 determines whether a finger touches the area a (FIG. 10(a)) of the first touch area A of the touch sensor 161 positioned above the fingerprint sensor 2162 by the touch information obtaining unit 2181 and the rectangular coordinates conversion unit 2183 (step S202).
Here, when it is determined that whether a finger touches the area a of the first touch area A (YES in step S202), the main control unit 2180 starts the mode control unit 2185 and causes the mode control unit 2185 to set a scan direction of the fingerprint sensor 2162 from above to below and set the fingerprint sensor 2162 into a standby mode (step S203), and transit the fingerprint sensor into a detection mode (step S210). When the fingerprint sensor transits into the detection mode, the control for the fingerprint information detection unit 2182 is performed, so that the fingerprint information detection unit 2182 starts fingerprint detection at a timing where the finger touches the second touch area B (an opposite area of the first touch area positioned in an opposite area of the second touch area B). After the fingerprint detection is normally performed (YES in step S211), the fingerprint sensor transits into a pause mode and the control unit ends the above processes. In the meantime, when the fingerprint detection is not normally performed (NO in step S211), the fingerprint information detection in the detection mode is repeated until a predetermined time period elapses (NO in step S212, S210, S211). After a predetermined time period elapses (YES in step S212), the fingerprint sensor transits into the pause mode and the control unit ends the above processes.

In the process of determining whether the touching is performed with the finger in step S202, when it is determined that a finger does not touch (NO in step S202), the area determination unit 2184 determines whether a finger touches the area c (FIG. 10(c)) of the first touch area A of the touch sensor 2161 positioned at the left of the fingerprint sensor 2162 by the touch information obtaining unit 2181 and the rectangular coordinates conversion unit 2183, under control of the main control unit 2180 (step S204). Here, when it is determined that the finger touches (YES in step S204), the mode control unit 2185 sets a scan direction of the fingerprint sensor 2162 from left to right, sets the fingerprint sensor 2162 into a standby mode (step S205) and then transits the fingerprint sensor into a detection mode (step S210), under control of the main control unit 2180. When the fingerprint sensor transits into the detection mode, the control for the fingerprint information detection unit 2182 is performed, so that the fingerprint information detection unit 2182 starts fingerprint detection at a timing where the finger touches the second touch area B (an opposite area of the first touch area positioned in an opposite area of the second touch area B). After the fingerprint detection is normally performed (YES in step S211), the fingerprint sensor transits into the pause mode and the control unit ends the above processes. In the meantime, when the fingerprint detection is not normally performed (NO in step S211), the fingerprint information detection in the detection mode is repeated until a predetermined time period elapses (NO in step S212, S210, S211). After a predetermined time period elapses (YES in step S212), the fingerprint sensor transits into the pause mode and the control unit ends the above processes.

In the meantime, in the process of determining whether the touching is performed with the finger in step S204, when it is determined that the finger does not touch (NO in step S204), the area determination unit 2184 further determines whether the finger touches the area b (FIG. 10(b)) of the first touch area A of the touch sensor 2161 positioned below the fingerprint sensor 2162 by the touch information obtaining unit 2181 and the rectangular coordinates conversion unit 2183, under control of the main control unit 2180 (step S206).
Here, when it is determined that the finger touches (YES in step S206), the mode control unit 2185 sets a scan direction of the fingerprint sensor 2162 from below to above, sets the fingerprint sensor 2162 into a standby mode (step S207) and transits the fingerprint sensor into a detection mode (S210), under control of the main control unit 2180. When the fingerprint sensor transits into the detection mode, the control for the fingerprint information detection unit 2182 is performed, so that the fingerprint information detection unit 2182 starts fingerprint detection at a timing where the finger touches the second touch area B (another area of the first touch area positioned in another area of the second touch area B). After the fingerprint detection is normally performed (YES in step S211), the fingerprint sensor transits into a pause mode and the control unit ends the above processes. In the meantime, when the fingerprint detection is not normally performed (NO in step S211), the fingerprint information detection in the detection mode is repeated until a predetermined time period elapses (NO in step S212, S210, S211). After a predetermined time period elapses (YES in step S212), the fingerprint sensor transits into a pause mode and the control unit ends the above processes.

In the meantime, in the process of determining whether the touching is performed with the finger in step S206, when it is determined that the finger does not touch (NO in step S206), the main control unit 2180 further determines whether the finger touches the area d (FIG. 10(d)) of the first touch area A of the touch sensor 2161 positioned at the right of the fingerprint sensor 2162 by the touch information obtaining unit 2181 (step S208).
Here, when it is determined that the finger touches (YES in step S208), the mode control unit 2185 sets a scan direction of the fingerprint sensor 2162 from right to left, sets the fingerprint sensor 2162 into a standby mode (step S209) and transits the fingerprint sensor into a detection mode (S210), under control of the main control unit 2180. When the fingerprint sensor transits into the detection mode, the control for the fingerprint information detection unit 2182 is performed, so that the fingerprint information detection unit 2182 starts fingerprint detection at a timing where the finger touches the second touch area B (an opposite area of the first touch area positioned in an opposite area of the second touch area B). After the fingerprint detection is normally performed (YES in step S211), the fingerprint sensor transits into a pause mode and the control unit ends the above processes. In the meantime, when the fingerprint detection is not normally performed (NO in step S211), the fingerprint information detection in the detection mode is repeated until a predetermined time period elapses (NO in step S212, S210, S211). After a predetermined time period elapses (YES in step S212), the fingerprint sensor transits into a pause mode and the control unit ends the above processes.

In the meantime, in the process of determining whether the touching is performed with the finger in step S208, when it is determined that the finger does not touch (NO in step S208), the fingerprint sensor transits into a pause mode and the control unit ends the above processes.

In the meantime, when it is not detected under timer monitoring that the finger touches, for a predetermined time period after the power is supplied to the fingerprint sensor 2162, the main control unit 2180 may stop the power supply to the fingerprint sensor 2162 after a predetermined time period elapses. Thereby, it is possible to further save the power.
Also for the touch sensor 2161, when a finger does not touch a predetermined time period, only a central part may be scanned or a thinned scanning may be performed without monitoring all of the first touch area A, so that it is possible to save the power.

As described above, according to the mobile electronic device according to the second embodiment of the present invention, the control unit 218 (main control unit 2180) sets the fingerprint sensor 2162 into a detectable state (standby mode) at a timing where the touch sensor 2161 detects the touching with the finger. Thus, it is possible to further reduce the power consumption, compared to a case where the fingerprint sensor 2162 always performs the fingerprint detection.
In addition, after the finger touches the first touch area A, the finger is scanned on the second touch area B, so that it is possible to perform the movement of a finger for starting the fingerprint detection and the scanning of the finger for fingerprint detection in a seamless manner.

In the meantime, after the control unit 218 (main control unit 2180) sets the fingerprint sensor 2162 into a standby mode by the mode control unit 2185, where it is possible to start the fingerprint detection, the control unit starts the fingerprint information detection unit 2182, starts the fingerprint detection by the fingerprint information detection unit 2182 and ends the fingerprint detection after detecting a fingerprint.
Here, the detected fingerprint information is transmitted to the fingerprint authentication unit 2186. The fingerprint authentication unit 2186 extracts, for example, characteristic points (end point, branch point) from the detected fingerprint information, stores information of the extracted characteristic points in a working area of the memory unit 17 and compares the information of the extracted characteristic points with the registered data of characteristic points stored in another area, thereby authenticating the detected fingerprint information.

According to the mobile electronic device of the second embodiment of the present invention, the fingerprint detection starts at a timing when it is detected that the finger touches any area of the touch sensor 2161. When the fingerprint detection has completed or fingerprint detection has not made even though a predetermined time period has elapsed, the control unit ends the state capable of starting fingerprint detection.
Therefore, it is possible to further reduce the power consumption, compared to a case where the fingerprint sensor 2162 always performs the fingerprint detection.

### (Another Embodiment)

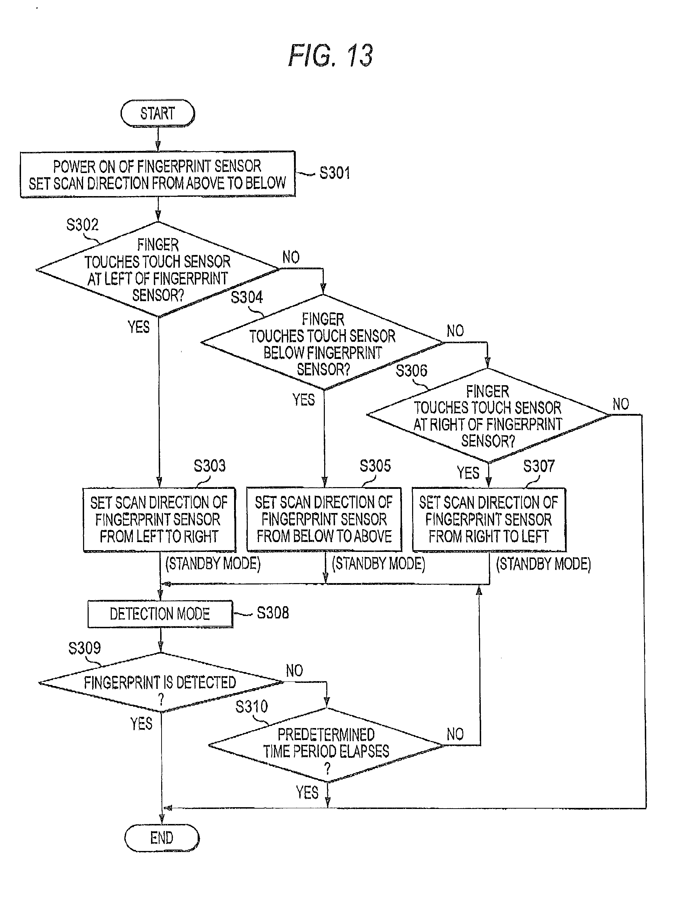

FIG. 13 is a flow chart showing an operation of a mobile electronic device (mobile telephone 10) according to another embodiment of the present invention.

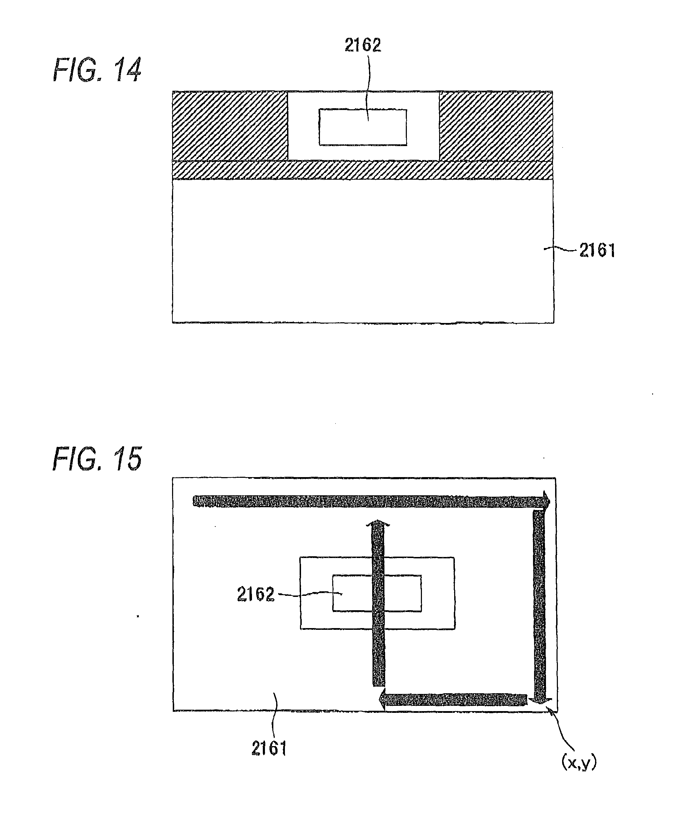

FIG. 14 shows an example of a mount arrangement of the sensor input unit 216 (touch sensor 2161 and fingerprint sensor 2162). As shown, the fingerprint sensor 2162 is mounted at an upper part of the sensor input unit 216. Here, the upper part indicates the hatched area of FIG. 14.

Hereinafter, the operations of the mobile electronic device (mobile telephone 10) according to the other embodiment of the present invention will be described with reference to the flow chart of FIG. 13.

First, the control unit 218 (main control unit 2180) supplies power to the fingerprint sensor 2162, and sets a scan direction from above to below according to a default setting (step S301).
Next, the area determination unit 2184 determines whether a finger touches the first touch area A of the touch sensor 2161 positioned at the left of the fingerprint sensor 2162 by the touch information obtaining unit 2181 and the rectangular coordinates conversion unit 2183 (step S302).
Here, when it is determined that a finger touches the first touch area A (YES in step S302), the main control unit 2180 sets a scan direction of the fingerprint sensor 2162 from left to right by the mode control unit 2185, sets the fingerprint sensor 2162 into a standby mode (step S303) and transits the fingerprint sensor into a detection mode (step S308). When the fingerprint sensor transits into the detection mode, the control for the fingerprint information detection unit 2182 is performed, so that the fingerprint information detection unit 2182 starts fingerprint detection at a timing where the finger touches the second touch area B (an opposite area of the first touch area positioned in an opposite area of the second touch area B). After the fingerprint detection is normally performed (YES in step S309), the fingerprint sensor transits into a pause mode and the control unit ends the above processes. In the meantime, when the fingerprint detection is not normally performed (NO in step S309), the fingerprint information detection in the detection mode is repeated until a predetermined time period elapses (NO in step S310, S308, S309). After a predetermined time period elapses (YES in step S310), the fingerprint sensor transits into a pause mode and the control unit ends the above processes.

In the meantime, in the process of determining whether the touching is performed with the finger in step S302, when it is determined that a finger does not touch (NO in step S302), the area determination unit 2184 determines whether a finger touches the touch sensor 2161 positioned below the fingerprint sensor 2162 by the touch information obtaining unit 2181 and the rectangular coordinates conversion unit 2183, under control of the main control unit 2180 (step S204).
Here, when it is determined that the finger touches (YES in step S304), the mode control unit 2185 sets a scan direction of the fingerprint sensor 2162 from below to above, sets the fingerprint sensor 2162 into a standby mode (step S305) and then transits the fingerprint sensor into a detection mode (step S308), under control of the main control unit 2180.
When the fingerprint sensor transits into the detection mode, the control for the fingerprint information detection unit 2182 is performed, so that the fingerprint information detection unit 282 starts fingerprint detection at a timing where the finger touches the second touch area B (another area of the first touch area positioned in another area of the second touch area B). After the fingerprint detection is normally performed (YES in step S309), the fingerprint sensor transits into a pause mode and the control unit ends the above processes. In the meantime, when the fingerprint detection is not normally performed (NO in step S309), the fingerprint information detection in the detection mode is repeated until a predetermined time period elapses (NO in step S310, S308, S309). After a predetermined time period elapses (YES in step S310), the fingerprint sensor transits into a pause mode and the control unit ends the above processes.

In the meantime, in the process of determining whether the touching is performed with the finger in step S304, when it is determined that the finger does not touch (NO in step S304), the main control unit 2180 further determines whether the finger touches the touch sensor 2161 positioned at the right of the fingerprint sensor 2162 by the touch information obtaining unit 2181 (step S306). Here, when it is determined that the finger touches (YES in step S306), the mode control unit 2185 sets a scan direction of the fingerprint sensor 2162 from right to left, sets the fingerprint sensor 2162 into a standby mode (step S307) and transits the fingerprint sensor into a detection mode (S308), under control of the main control unit 2180.
When the fingerprint sensor transits into the detection mode, the control for the fingerprint information detection unit 2182 is performed, so that the fingerprint information detection unit 2182 starts fingerprint detection at a timing where the finger touches the second touch area B (another area of the first touch area positioned in another area of the second touch area B). After the fingerprint detection is normally performed (YES in step S309), the fingerprint sensor transits into a pause mode and the control unit ends the above processes. In the meantime, when the fingerprint detection is not normally performed (NO in step S309), the fingerprint information detection in the detection mode is repeated until a predetermined time period elapses (NO in step S310, S308, S309). After a predetermined time period elapses (YES in step S310), the fingerprint sensor transits into a pause mode and the control unit ends the above processes.

In the meantime, in the process of determining whether the touching is performed with the finger in step S306, when it is determined that the finger does not touch (NO in step S306), the fingerprint sensor transits into a pause mode and the control unit ends the above processes.

According to the mobile electronic device of the other embodiment of the present invention, even when the fingerprint sensor 2162 is mounted at the upper part of the sensor input unit 216, the control unit 218 (main control unit 2180) sets the fingerprint sensor 2162 into a detectable state (standby mode) at a timing where the touch sensor 2161 detects the touching with the finger, as the embodiment (the fingerprint sensor 2162 is mounted in the touch sensor 2161) shown in FIGS. 10(a), 10(b), 10(c) and 10(d). Thus, it is possible to further reduce the power consumption, compared to a case where the fingerprint sensor 2162 always performs the fingerprint detection.

Meanwhile, in the example of the mount arrangement of the sensor input unit 216 shown in FIG. 14, the hatched area (i.e., left, right and below areas of the fingerprint sensor 2162) is recognized for a user just as an area where the fingerprint sensor 2162 is arranged. Therefore, it is recognized that only an area except the hatched area is provided as the first touch area A.
Although the touch sensor 2161 is arranged in a part of the hatched area, the corresponding area is used for setting a scan direction of the fingerprint sensor 2162. Accordingly, the touch sensor 2161 and the fingerprint sensor 2162 may be provided so that user can recognize them as separate devices (modules).

As described above, according to the mobile electronic devices of the second and the other embodiment of the present invention, in a case where both the touch sensor 2161 and the fingerprint sensor 2162 are mounted, it is possible to efficiently monitor whether both the touch sensor and the fingerprint sensor are touched. Thus, it is possible to save the power.

In the meantime, FIG. 15 shows an example of a moving trace of a finger on the sensor input unit 216. As shown, it is possible to set the control unit 218 (main control unit 2180) to respond when the sensor input unit 216 detects specific movement of a finger thereon, for example, when a user sequentially moves the finger in directions indicated with arrows.
Accordingly, it is also conceivable of supplying power the fingerprint sensor 2162 and setting the fingerprint sensor into a standby mode at a final arrival position (x, y coordinates) of the downward arrow direction.
At this time, when the control unit 218 (main control unit 2180) detects the specific movement of the finger, the control unit sets a state capable of starting the fingerprint detection in the second touch area B.

In the meantime, the mobile telephone 10 is exemplified as the mobile electronic devices of the second and other embodiments of the present invention. However, the invention is not limited to the mobile telephone 10. For example, the invention can be also applied to a PDA (Personal Digital Assistant), a gaming device and the like.

In addition, all of the functions of the respective function blocks of the mobile electronic devices according to the second and other embodiments of the present invention may be embodied with software or at least a part thereof may be embodied with hardware. For example, for a case where the second touch area B is adjacent to the first touch area A, when it is detected that a finger touches the first touch area A (for example, it is detected that a finger touches the area a of FIG. 10(a)), a function is provided which sets a state capable of starting the fingerprint detection in the second touch area B.
Further, the data process of the control unit 218, in which when the second touch area B is positioned in the first touch area A (for example, FIGS. 10(a), 10(b), 10(c) and 10(d)) and it is detected that a finger touches any area of the first touch area A (for example, area a of FIG. 10(a)), the control unit 218 sets a state capable of starting the fingerprint detection in the second touch area B and then when fingerprint detection has completed or fingerprint detection has not made even though a predetermined time period has elapsed, the control unit ends the state capable of starting fingerprint detection, may be embodied on a computer by one or more programs or at least a part thereof may be embodied with hardware.

This application claims the priority of Japanese Patent Application No. 2008-114242 filed on April 24, 2008 and Japanese Patent Application No. 2008-116349 filed on April 25, 2008, respectively, the disclosures of which are incorporated herein by reference.

### Descriptions of Reference Numerals

10: mobile telephone, 11: communication unit, 12: operation unit, 13: CODEC unit, 14: display unit, 15: photographing unit, 116, 216: sensor input unit, 17: memory unit, 118, 218: control unit, 19: system bus, 102: lower case, 1161, 2161: touch sensor, 1162, 2162: fingerprint sensor, 1181: touch information obtaining unit, 1182; fingerprint information detection unit, 1183: fingerprint authentication unit, 1184: moving trace monitoring unit, 1185: rectangular coordinates determination unit, 2181: touch information obtaining unit, 2182: fingerprint information detection unit, 2183: rectangular coordinates information conversion unit, 2184: area determination unit, 2185: mode control unit, 2186; fingerprint authentication unit

## Claims

1. A mobile electronic device comprising:
a touch sensor that detects, in a first touch area, touching with a finger to obtain touch information;
a fingerprint sensor that detects, in a second touch area adjacent to the first touch area, surface unevenness of the finger to obtain fingerprint information; and
a control unit that processes the touch information in time series to generate first movement information of the finger, processes the fingerprint information in time series to generate second movement information of the finger, and associates the first movement information with the second movement information to generate information relating to movement of the finger from the first touch area to the second touch area.

2. A mobile electronic device comprising:
a touch sensor that detects, in a first touch area, touching with a finger to obtain touch information;
a fingerprint sensor that detects, in a second touch area provided inside the first touch area, surface unevenness of the finger to obtain fingerprint information; and
a control unit that processes the touch information in time series to generate first movement information of the finger, processes the fingerprint information in time series to generate second movement information of the finger, and associates the first movement information with the second movement information to generate information relating to movement of the finger from the first touch area to the second touch area.

3. The mobile electronic device according to claim 1,
wherein the control unit converts the first movement information in the first touch area into a fist rectangular coordinate system, converts the second movement information in the second touch area into a second rectangular coordinate system, and converts a value of the second rectangular coordinate system into the first rectangular coordinate system to generate synthesized movement information of the finger.

4. The mobile electronic device according to claim 1,
wherein in a case where the finger touches only one of the first touch area and the second touch area at a certain time and then touches both the first touch area and the second touch area with the touching being kept, the control unit generates movement information preferentially from the area that the finger touches at the certain time, as movement information of the finger during time when the finger touches both the areas.

5. A mobile electronic device comprising:
a touch sensor that detects, in a first touch area, touching with a finger to obtain touch information;
a fingerprint sensor that detects, in a second touch area adjacent to the first touch area, surface unevenness of the finger to perform fingerprint detection; and
a control unit that, when it is detected that the finger touches the first touch area, sets a state capable of starting the fingerprint detection in the second touch area.

6. The mobile electronic device according to claim 5,
wherein the first touch area has an adjacency area in an area adjacent to the second touch area, and
wherein the control unit sets the state capable of starting the fingerprint detection in the second touch area, when it is detected that the finger touches the adjacency area.

7. The mobile electronic device according to claim 5,
wherein the fingerprint sensor performs the fingerprint detection by scanning the finger on the second touch area.

8. The mobile electronic device according to claim 7,
wherein the control unit sets a direction of the fingerprint detection in the fingerprint sensor based on a position at which the touching with the finger is detected in the first touch area.

9. A mobile electronic device comprising:
a touch sensor that detects, in a first touch area, touching with a finger to obtain touch information;
a fingerprint sensor that detects, in a second touch area provided inside the first touch area, surface unevenness of the finger to perform fingerprint detection; and
a control unit that, when it is detected that the finger touches the first touch area, sets a state capable of starting the fingerprint detection in the second touch area, and after setting the state capable of starting the fingerprint detection, when the fingerprint detection has completed or the fingerprint detection has not made even though a predetermined time period has elapsed, ends the state capable of starting the fingerprint detection.

10. The mobile electronic device according to claim 5 or 9,
wherein the control unit sets the state capable of starting fingerprint detection in the second touch area, when a specific movement of the finger is detected in the first touch area.
